(19) Europäisches Patentamt / European Patent Office / Office européen des brevets

(11) **EP 3 871 833 A1**

(12) **EUROPEAN PATENT APPLICATION**

(43) Date of publication:
**01.09.2021 Bulletin 2021/35**

(51) Int Cl.:
**B23Q 15/24** (2006.01)   **B23Q 15/26** (2006.01)
**G05B 13/04** (2006.01)

(21) Application number: **20382137.6**

(22) Date of filing: **27.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Airbus Operations, S.L.U.**
  **28906 Getafe (Madrid) (ES)**
• **Airbus SAS**
  **31700 Blagnac (ES)**

(72) Inventors:
• **SOUTHWOOD CARRASCO, Juan, Carlos**
  **28906 Getafe (Madrid) (ES)**
• **LOUAT, Christophe**
  **31700 Blagnac (FR)**
• **ZANNI, Arnaud**
  **31700 Blagnac (FR)**

(74) Representative: **Herrero & Asociados, S.L.**
  **Cedaceros, 1**
  **28014 Madrid (ES)**

(54) **AUTOMATED DRILLING OPTIMIZATION METHOD**

(57)   A method for optimizing the execution of automated drilling systems controlled by a numerical control, NC, machine, wherein the NC machine performs the following steps:
- Identifying each drill executed by an automated drilling tool at a time instant, t;
- storing a theoretical position of each executed drill at the instant t:
- calculating a learned position using a machine learning model and based on the stored theoretical position at the instant t;
- estimating an intermediate position by applying a tendency statistical function and, if the difference between the intermediate position and the learned position is under a pre-configured threshold, using the intermediate position for the drilling tool to position a next drill and execute it at a next time instant, t+1.

FIG. 4

EP 3 871 833 A1

**Description**

**Field of the invention**

The present invention relates to the field of automated drilling and countersinking processes, specially used in aircraft manufacturing and assembly industry.

More particularly, the present invention refers to a method for optimizing the execution of automated drilling and/or countersinking tools controlled by an automated control system.

**Background of the invention**

Numerical control (NC) (also called computer numerical control, CNC) is the automated control of machining tools (such as drills, countersinks, boring tools, lathes, etc.) by means of a computer. A NC machine processes a piece of material (metal, plastic, wood, ceramic, or composite) to meet specifications by following a coded programmed instruction and without a manual operator.

NC-like systems are used for any process that can be described as movements and operations. These include laser cutting, welding, friction stir welding, ultrasonic welding, flame and plasma cutting, bending, spinning, hole-punching, pinning, gluing, fabric cutting, sewing, tape and fiber placement, routing, picking and placing, and sawing. A particular application of NC machines or robots is in aircraft manufacturing.

Nowadays, when programming a numerical control machine for drilling and/or countersinking, the positions, movements and the related processes are performed and simulated in a theoretical way.

In numerical control systems, the position of the tool is defined by a set of instructions called the part program. When the part is produced in the automated cell, where the NC machine works, significant changes regarding the theory are found, due to the chain of tolerances, process and product capabilities. The way to adapt to these differences is integrated in the NC machine capabilities and there are several ways to achieve it, but the most common is known as rototranslation, which is the adaptation of the theoretical drilling map to the reality that the machine has measured. However, this adaptation to the reality leads to non-optimized movements to reach the target (e.g., a drill), with the consequent performance loss.

Therefore, it is highly desirable to provide a method to improve the productivity of automated controlled drilling tools by bringing closer the theory and reality in the execution of movement and positioning processes for drilling.

**Summary of the invention**

The present invention solves the aforementioned problems and overcomes previously explained state-of-art work limitations by providing an automated drilling optimization method which optimizes the performance of a drilling and/or countersinking process executed by an automated control system (i.e., a Numerical Control machine or robot).

An aspect of the present invention refers to a method for optimizing the execution of automated drilling tools controlled by a Numerical Control machine according to claim 1.

The present invention applies to the positioning of any type of machining tool (e.g., for drilling, countersinking, removal of glue or sealant type products, inspection by sensors, rotating tool, or any other operation necessary for manufacturing an assembly of parts) which operates under an automated control by a NC-like system. Preferably, but not exclusively, the field of application of the invention is the optimization of the execution of drills in a structural surface, such as an airplane cell being machined/assembled.

The present invention has a number of advantages with respect to prior art, which can be summarized as follows:

- The present invention allows the optimization of production processes by finding learned positions which bring closer the theory and reality, thanks to using data generated in previous executions.
- The learned positions calculated by applying machine learning reduce empty movements and optimize machine positioning processes.
- With this movement and positioning optimization, a productivity improvement of the machine is achieved while keeping all the machine processes that guarantee the quality and safety of the operation.

These and other advantages will be apparent in the light of the detailed description of the invention.

**Description of the drawings**

For the purpose of aiding the understanding of the characteristics of the invention, according to a preferred practical embodiment thereof and in order to complement this description, the following Figures are attached as an integral part thereof, having an illustrative and non-limiting character:

Figure 1 shows a graphic of the Correction Error distribution of a Benchmark model used for evaluation of a machine learning model used in the Automated Drilling Optimization Method.

Figure 2 shows a graphic of the Correction Error distribution of a first machine learning model used in the Automated Drilling Optimization Method.

Figure 3 shows a graphic of the Correction Error distribution of a second machine learning model used in the Automated Drilling Optimization Method.

Figure 4 shows a schematic diagram summarizing the Automated Drilling Optimization Method according to a preferred embodiment.

**Preferred embodiment of the invention**

The embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

A preferred embodiment of the automated drilling optimization method uses production data from past executions of the automated drilling and machine learning to better adjust theoretical positioning to the reality by going to learned positions with an increase of the automated drilling system productivity. Learned positions result from the statistical calculation of the previous executed positions and are the final deliverable to the part program (or computer numerical control, CNC, file) providing the position value to optimize the drilling process.

In a preferred embodiment, each drill has a unique identifier, ID, which is defined by the numerical control machine executing the part program and controlling the automated drilling tool. Each execution of a drill also has a unique identifier so that historical executions can be traced by the numerical control machine. The final position of each execution is recorded by the NC, numerical control, machine.

If several past executions are retrieved at final drill position level, a tendency function can be found that allows the prediction of the theoretically best position for the next execution of the drill. The tendency function (e.g., a regression algorithm) provides an intermediate position between the theory and the reality that will be closer to the reality thanks to a learned position which is calculated based on the past executions input in a machine learning model.

If only theoretical positions are used, the part program of the NC machine makes a first movement to the drilling point determined by the theoretical position and then checks whether the conditions for drilling at this point are met to guarantee quality and safety of the operation. If the quality and safety requirements are met, the drilling tool is instructed to execute/perform a drill at the determined (theoretical) position. If any of the quality and safety requirements is not met, the NC machine makes a second movement to adjust the drilling head of the tool to the drilling point, which leads to waste of time and productivity since the first movement resulted in an empty movement (i.e., a movement that does not add value to the drilling process). This second movement of adjustment typically occurs in 90% of executions.

The main aim of the automated drilling optimization method is to avoid the second movement of adjustment by using the intermediate position, instead of the theoretical position, calculated through the tendency function. This intermediate position is a learned position which is also stored by the NC machine so that the learned position can be used as input in training the machine learning model. The use of learned positions reduces empty movements and optimize the positioning process of the machining tool for drilling and/or countersinking. The use of learned positions allows to reduce the time lapsed between the start of positioning and the start of drilling.

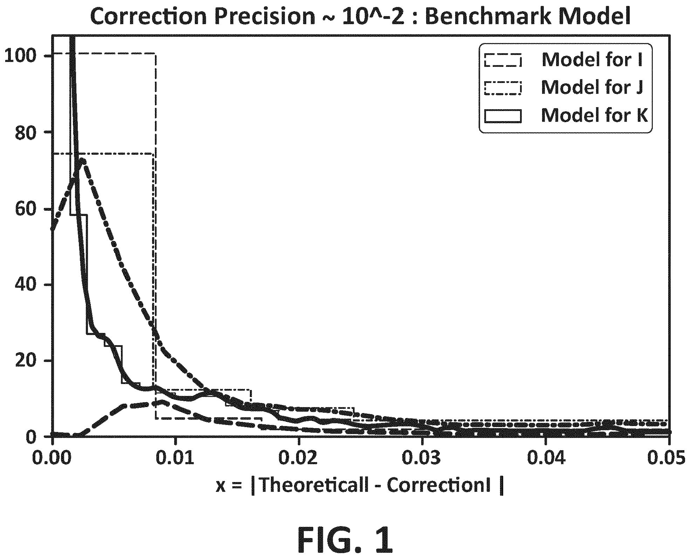

In order to evaluate the machine learning, ML, model used in the proposed method to optimize the drilling process, a benchmark model is presented, shown in Figure 1. At a given drilling operation t, which corresponds to a new hole needing to be drilled, the following assumption is made:

$$Theoretical\_I_t = Correction\_I_{t-1}$$

$$Theoretical\_J_t = Correction\_J_{t-1}$$

$$Theoretical\_K_t = Correction\_K_{t-1}$$

*Correction_I, Correction_J* and *Correction_K* are the values to be predicted by the machine learning model in order to reduce the iterations required to be executed by the automated drilling system to correct the position of the drill. *Correction_I, Correction_J* and *Correction_K* are the components (real numbers) of a -correction-normal vector calculated by the NC machine for every drilling hole, having holes drilled at operation t-1, t, t+1,..., wherein t denotes time instants. The normal vector is a vector (I, J, K) orthogonal to the surface to be drilled at the drilling point or drill position. *Theoretical_I, Theoretical_J* and *Theoretical_K* are the theoretical values of the drill position, i.e., the theoretical components of the normal vector defined before the optimization of the method.

The NC machine computes the error made by the automated drilling system for every t:

$$|Correction\_I_t - Theoretical\_I_t| = |Correction\_I_t - Correction\_I_{t-1}|$$

and, based on the computed error, the distribution of the Benchmark Correction Error to be outperformed is established, as shown in Figure 1, which illustrates the dispersion of the values mainly moved from 0 to 0.01

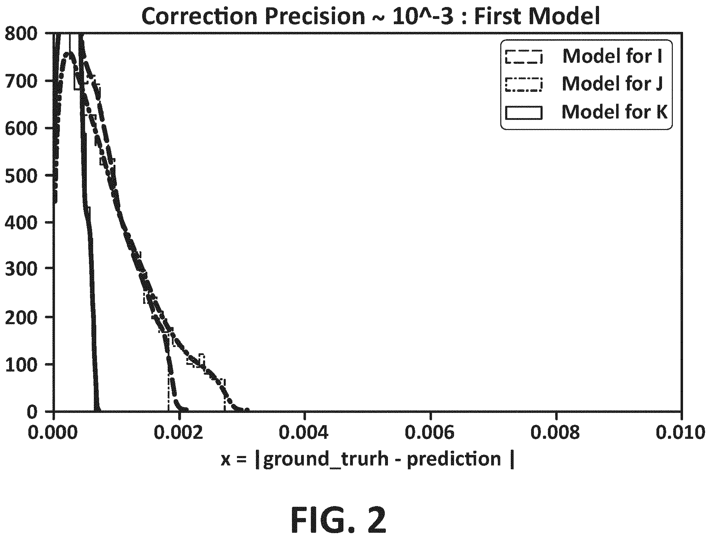

Figure 2 shows a first ML model trained to predict the normal vector (I, J, K) for every single drill operation t. Each normal vector predicted by ML modelling is called a correction vector and its components are *Correction_I, Correction_J* and *Correction_K, whose* values are in sexagesimal degrees of the angular movements to be made by the drilling head of the tool.

This first ML model combines three small models, Model for I, Model for J and Model for K, as shown in Figure 2, each small model focused on one of the three dimensions of the correction vector.

A small Model for I takes as input a dataset composed of the following values:

$$[Theoretical\_X_t, Theoretical\_Y_t, Theoretical\_Z_t, TDrill_t, Quarter_t]$$

and the small Model for I returns as output the value of the first component $Correction\_I_t$

It works the same way for the small Model for J and small Model for K, returning the second component $Correction\_J_t$ and the third component $Correction\_K_t$ of the correction vector.

Please note that:

- $X_t$, $Y_t$ and $Z_t$ denote the spacial coordinates where is placed the hole in the learned position.
- **Theoretical_$X_t$, Theoretical_$Y_t$** and **Theoretical_$Z_t$** are the theoretical coordinates there the hole is placed. Before applying machine learning for the optimization of the method.
- **I, J** and **K** are the components of the normal vector (orthogonal to the surface to be drilled) for the given drill (at the drill position).
- **TDrill** is the identifier or name (only given as reference) of the NC machine to be applied.
- **Quarter** is a name only given as reference to distinct the part of the process where applies for a NC given machine.

The Corrected Prediction Error is computed by the NC machine for every drill operation t and the distribution of the First Correction Error is established. As shown in Figure 2, the dispersion of the values mainly moved from 0 to 0.001, which means that the first ML model achieves a precision of 10^-3, better than the 10^-2 precision of the benchmark model shown in Figure 1.

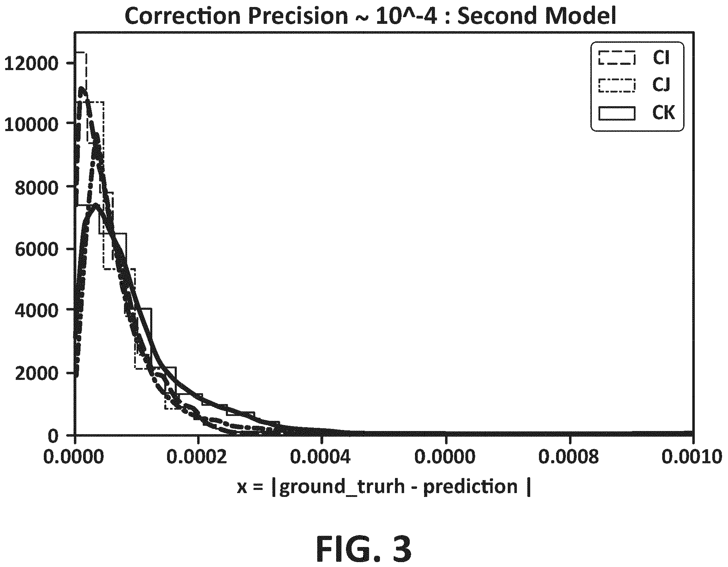

Figure 3 shows a second ML model trained to predict the correction vector (I, J, K) for every single drill operation t.

*I, J* and *K* are values in sexagesimal degrees of the angular movements to be made by the drilling head of the tool.

This second ML model combines three small models, Model for I, Model for J and Model for K, as shown in Figure 3, each small model focused on one of the three dimensions of the correction vector.

A small Model for I takes as input the dataset composed of the following values:

$$[Theoretical\_X_t, Theoretical\_Y_t, Theoretical\_Z_t, TDrill_t, Quarter_t, Correction\_I_{t-1}, Correction\_J_{t-1}, Correction\_K_{t-1}]$$

and the small Model for I returns as output the value of $Correction\_I_t$

It works the same way for the small Model for J and small Model for K.

The Corrected Prediction Error is computed by the NC machine for every drill operation t and the distribution of the Second Correction Error is established. As shown in Figure 3, the dispersion of the values mainly moved from 0 to 0.0001, which means that the second ML model achieves a further improved precision of 10^-4, much better than the 10^-2 precision of the benchmark model shown in Figure 1.

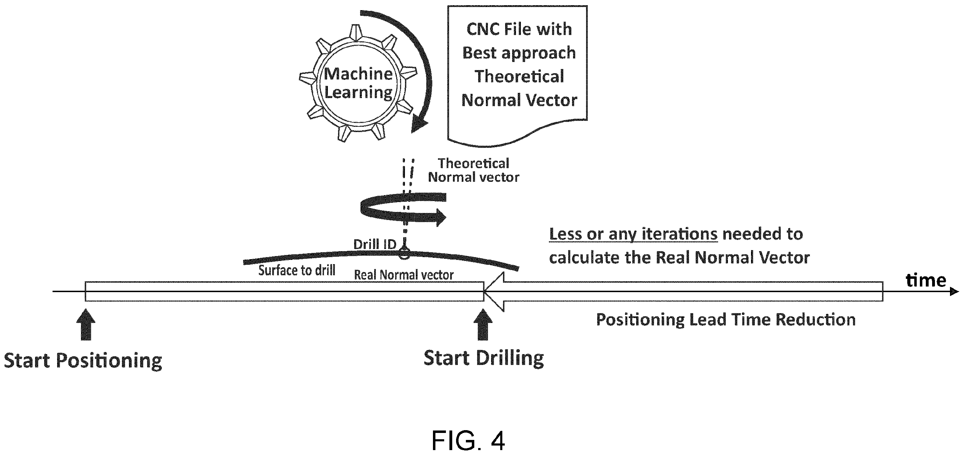

Figure 4 is a schematic diagram which summarizes the operation of the automated drilling tool controlled by the NC or CNC machine. The NC machine checks whether the drilling process is stable, that is, whether the differences between the (drilling / countersinking) executions/operations are less than a pre-established threshold (percentage). Then, if stable, the NC machine applies a statistical tendency function (e.g., a regression algorithm) to estimate the most favorable (optimal) position that reduces the time between positioning and drilling. This regression is applied for each drilling operation made to each surface to be drilled. Each drill has its identifier ID for this application. In the machine learning for each identified drill, the theoretical positions and those learned positions that have been obtained in previous drill operations are stored by the NC machine. As known in machine learning, there is a training phase and then a test / operation phase. The machine learning applied by the NC machine as described before achieves a reduction of the positioning lead time, i.e., a reduction of the latency between the initiation and completion of the process of positioning the automated drilling tool to execute the drill.

The pre-requisites needed to ensure a proper optimization of the process are the following:

- At the automated cell level (where the NC machine works);

  - Capability to record at execution phase, all the relevant positions for each drill.
  - Capability to adapt the part program executed by the NC machine.

- At programming level:

  - Capability to identify with a unique ID each drill.
  - Keep this ID invariant for each execution, until a design/product of the automated drilling system changes; if a change happens, a new ID has to be issued by the NC machine.

- At execution level:

  - Capability to retrieve the relevant data from executions.
  - Capability of producing no significant variances between executions.
  - Capability to adapt the part program to the learned positions calculated by machine learning.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A method for optimizing the execution of automated drilling and/or countersinking tools controlled by a numerical control machine, **characterized by** comprising the following steps:

   i) identifying, with a unique identifier defined by the numerical control machine, each drill executed by an automated drilling tool at a time instant, t;
   ii) storing a theoretical position of each executed drill at the time instant t, the theoretical position being a pre-configured static position;
   iii) calculating a learned position using a machine learning model and based on the stored position for the time instant t;
   iv) estimating an intermediate position by applying a tendency statistical function and

      if the difference between the intermediate position and the learned position is under a pre-configured threshold, using the intermediate position to position the drilling tool for executing a next drill at a next time instant, t+1;
      otherwise, storing the intermediate position for the next time instant, t+1 and repeating the steps iii) and iv).

2. The method according to any preceding claim, wherein the steps i)-iv) are performed by the numerical control machine.

3. The method according to any preceding claim, wherein the statistical tendency function is a regression algorithm.

4. The method according to any preceding claim, wherein
   the step iii) of calculating the learned position at the time instant t comprises:

   - calculating a normal vector at the time instant t which is orthogonal to the surface to be drilled, the normal vector being defined by three components $I_t$, $J_t$ and $K_t$;

- calculating by using a machine learning model a correction vector at the time instant t being defined by three components Correction_$I_t$, Correction_$J_t$ and Correction_$K_t$, wherein the machine learning model combines a first machine learning model for the component $I_t$, a second machine learning model for the component $J_t$ and a third machine learning model for the component $K_t$, and wherein

the machine learning model takes as input data comprising at least a theoretical vector defined by three components Theoretical_$X_t$, Theoretical_$Y_t$ and Theoretical_$Z_t$, which are spacial coordinates in the three dimensional space defining the theoretical position of the drill to be executed at the time instant t;

the first machine learning model returns as output the first component Correction_$I_t$ of the correction vector;

the second machine learning model returns as output the second component Correction_$J_t$ of the correction vector; and

the third machine learning model returns as output the third component Correction_$K_t$ of the correction vector.

- the learned position being defined in the three dimensional space by the spacial coordinates $X_t$, $Y_t$ and $Z_t$;

5. The method according to claim 4, wherein the input data taken by the machine learning further comprises a correction vector calculated at a previous time instant t-1 with components Correction_$I_{t-1}$, Correction_$J_{t-1}$ and Correction_$K_{t-1}$.

6. The method according to any of claims 4-5, wherein the components of the correction vector are calculated in degrees of angular movement for the automated drilling tool.

7. The method according to any of claims 4-6, further comprising computing by the numerical control machine an error for the time instant t to determine whether the difference between the intermediate position and the learned position is under the pre-configured threshold, the error being computed as |Correction_$I_t$ - Correction_$I_{t-1}$| for the first machine learning model, |Correction_$J_t$ - Correction_$J_{t-1}$| for the second machine learning model and |Correction_$K_t$ - Correction_$K_{t-1}$| for the third machine learning model.

Correction Precision ~ 10^-2 : Benchmark Model

FIG. 1

**FIG. 2**

FIG. 3

FIG. 4

Europäisches
Patentamt

European
Patent Office

Office européen
des brevets

# EUROPEAN SEARCH REPORT

Application Number

EP 20 38 2137

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/084112 A1 (KOJIMA TAKUYA [JP] ET AL) 21 March 2019 (2019-03-21) | 1,2,4-7 | INV.<br>B23Q15/24<br>B23Q15/26<br>G05B13/04 |
| Y | * figures 1-4 *<br>* paragraphs [0028] - [0063] * | 3 | |
| Y | CN 107 457 418 A (SHANNXI DIESEL ENGINE HEAVY INDUSTRY CO LTD) 12 December 2017 (2017-12-12)<br>* figures 1,2 *<br>* paragraphs [0009] - [0039] * | 3 | |

TECHNICAL FIELDS
SEARCHED      (IPC)

B23Q
G05B

The present search report has been drawn up for all claims

| Place of search | Date of completion of the search | Examiner |
|---|---|---|
| The Hague | 1 September 2020 | Groen, Fokke |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 38 2137

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2020

| Patent document cited in search report | Publication date | Patent family member(s) | Publication date |
|---|---|---|---|
| US 2019084112 A1 | 21-03-2019 | CN 109500619 A<br>DE 102018215617 A1<br>JP 2019053598 A<br>US 2019084112 A1 | 22-03-2019<br>21-03-2019<br>04-04-2019<br>21-03-2019 |
| CN 107457418 A | 12-12-2017 | NONE | |

EPO FORM P0459

For more details about this annex : see Official Journal of the European Patent Office, No. 12/82